# EUROPEAN PATENT SPECIFICATION

(11) **EP 3 828 745 B1**
(45) Date of publication and mention of the grant of the patent: **12.11.2025**
(21) Application number: 19840525.0
(22) Date of filing: 25.07.2019
(51) Int. Cl.: G06F 21/55, G06F 21/44

(54) **INFORMATION PROCESSING DEVICE, INFORMATION PROCESSING METHOD, AND INFORMATION PROCESSING PROGRAM**
INFORMATIONSVERARBEITUNGSVORRICHTUNG, INFORMATIONSVERARBEITUNGSVERFAHREN UND INFORMATIONSVERARBEITUNGSPROGRAMM
DISPOSITIF, PROCÉDÉ ET PROGRAMME DE TRAITEMENT D'INFORMATIONS

(30) Priority: 26.07.2018 JP 2018140538
(43) Date of publication of application: 02.06.2021
(73) Proprietor: Digital Arts Inc., Tokyo 100-0004 (JP)
(72) Inventor: DOGU Toshio, Tokyo 100-0004 (JP); MATSUMOTO Takuya, Tokyo 100-0004 (JP); HOSOYA Keisuke, Tokyo 100-0004 (JP); INOMATA Kiyoto, Tokyo 100-0004 (JP)
(74) Representative: Liesegang, Eva
(86) International application number: PCT/JP2019/029287
(87) International publication number: WO 2020/022456

(56) References cited:
- EP-A1- 3 101 580
- GB-A- 2 513 168
- JP-A- 2006 155 124
- JP-A- 2013 257 773
- JP-A- 2015 170 219
- JP-A- 2016 045 887
- JP-A- 2017 502 625
- US-A1- 2007 136 806
- US-A1- 2012 005 743
- US-A1- 2012 060 221

## Description

### Technical Field

The embodiment of the present invention relates to information processing device, information processing method and information processing program.

### Background Art

A web server stores contents created and updated by an administrator who manages the server, and executes an operation of returning the contents in response to a request from a client terminal.

The web server has various software programs including an OS installed therein, and uses these software programs to support the creation and updating of contents and communicate with client terminals. If these software programs have vulnerability (security weakness), a malicious third party may exploit this vulnerability to make attacks on the server (for example, SQL injection).

If an attack by a malicious third party is successful, the malicious third party may invade the server and launch a watering hole attack by intentionally falsifying the contents. A watering hole attack is a kind of cyberattack in which a malicious third party falsifies a legitimate website users normally access via the Internet and leads client terminals having accessed the legitimate website to a malicious site that causes the client terminals to download malware or the like.

In order to prevent access to malicious URLs that causes users to download malware, it is important to acquire many malicious URLs in advance. There has been conventionally disclosed a technique by which an execution device that virtually executes malware files acquired based on URLs and the like acquired through users' communication logs is provided, and, at execution of malware, URLs and the like as destinations of communication with the malware files are acquired, and the URLs of the connection destinations are collected and put on a blacklist.
US 2012/005743 A1 discloses a relay apparatus log analysis apparatus periodically receives log data from a relay apparatus when detecting a traffic abnormality, an abnormality detection apparatus notifies the IP address of a terminal device that has caused the abnormality to the relay apparatus log analysis apparatus, the relay apparatus log analysis apparatus analyzes traffic information generated by a router apparatus to identify a time when the traffic abnormality has occurred, the relay apparatus log analysis apparatus analyzes the log data, based on the occurrence time of the traffic abnormality and the IP address of the terminal device that has caused the abnormality, identifies an address accessed by the terminal device, regards the identified address as the destination from the malware, and sets the relay apparatus so as to block a packet to the address.
EP 3 101 580 A1 discloses a malicious URL candidate extraction device extracts, from an access log including URLs accessed from a managed network, a known malicious URL excluded access log obtained by excluding an access log to known malicious URLs. The malicious URL candidate extraction device creates a minor URL list obtained by preferentially extracting, from URLs indicated in the known malicious URL excluded access log, URLs having a small number of times of access from the managed network. The malicious URL candidate extraction device also creates a popular URL excluded list obtained by preferentially excluding URLs having a large number of times of access from the managed network during a predetermined period of time. The malicious URL candidate extraction device outputs these lists as a malicious URL candidate list.
JP 2013-257773 A addresses the problem of how to properly monitor an access to an unknown malignant URL by properly discovering the malignant URL. As solution, it is suggested: A monitoring device checks whether a URL coincident with a known malignant URL exists among entrance URLs or access destination URLs stored in a connection relation storage part, and detects a combination of an entrance URL and an access destination URL as a combination of a malignant URL in the case that there is the combination of the entrance URL and the access destination URL with a URL coincident with the known malignant URL existing therein. Then, the monitoring device monitors that a client accesses to the entrance URL of the detected combination of the malignant URLs.
JP 2016-045887 A addresses the problem of how to allow detection of an access to an unknown harmful site and reduce load on the detection. As solution, it is suggested: Observation devices and include a data measurement unit collecting information on an access of a user to a web page and a transmission/reception unit transmitting the collected information to an analyzer device the analyzer device having a transmission/reception unit receiving the transmitted information, an analyzing unit detecting a specific method for page transition based on the received information and judging the presence of harm of contents downloaded through an access to a web page based on the detection results obtained with the specific method, and an information request unit determining the contents judged as being suspected to be harmful by the analyzing unit to be the targets of analysis.

### Citation List

### Patent Literature

Patent Literature 1: JP 2014-179025 A

### SUMMARY OF INVENTION

### PROBLEM TO BE SOLVED BY INVENTION

However, even though many malicious URLs that lead users to sites that cause them to download malware or phishing sites (fraudulent sites) can be detected, if contents corresponding to a legitimate website are intentionally falsified and an attack are launched to cause users having accessed the legitimate website to shift to a malicious site, it is difficult to immediately detect the URL of the legitimate website that has been falsified.

For this reason, the administrator who manages the server corresponding to the legitimate site cannot notice the falsification of the content at an early stage, and the legitimate site may be left as a website harmful to the users.

The present invention has been made in consideration of such circumstances, and an object of the present invention is to provide an information processing device, an information processing method, and an information processing program that allow falsification of contents of a web server to be detected at an early stage.

### MEANS FOR SOLVING PROBLEM

An information processing device according to the invention is defined in claim 1.

### EFFECT OF INVENTION

According to an embodiment of the present invention, an information processing device, an information processing method, and an information processing program that allow falsification of contents of a web server to be detected at an early stage can be provided.

### BRIEF DESCRIPTION OF DRAWINGS

Fig. 1 is a configuration diagram that illustrates an example of a configuration of an information processing device according to a first embodiment.
Fig. 2(A) is an explanatory diagram that explains a flow of access in which, after a request from a client terminal, a connection is made to a URL different from the request destination URL by URL redirection, and Fig. 2(B) is a diagram that illustrates an example of an access log extracted by a log extraction unit of the information processing device.
Fig. 3(A) is an explanatory diagram that illustrates an example of URLs stored in a database, and Fig. 3(B) is an explanatory diagram that illustrates an example of destinations of notification to administrators associated with benign URLs.
Fig. 4 is a flowchart that illustrates an example of an information processing method according to the first embodiment.
Fig. 5(A) is a diagram that illustrates a flow of access in which, when html data managed by a Company A's web server is falsified by a malicious third party as an example of a drive-by download attack, a request is made with a referrer of a specific search site, and Fig. 5(B) is a diagram that illustrates a flow of access in which a request for html data is made without going through a search site.
Fig. 6 is a configuration diagram that illustrates an example of a configuration of an information processing device according to a second embodiment.
Fig. 7 is a flowchart that illustrates an example of an information processing method according to the second embodiment.
Fig. 8 is a configuration diagram that illustrates an example of a configuration of an information processing device according to a third embodiment.
Fig. 9 is a flowchart that illustrates an example of an information processing method according to the third embodiment.

### Description of Embodiments

### (First Embodiment)

Hereinafter, embodiments of the present invention will be described with reference to the accompanying drawings.

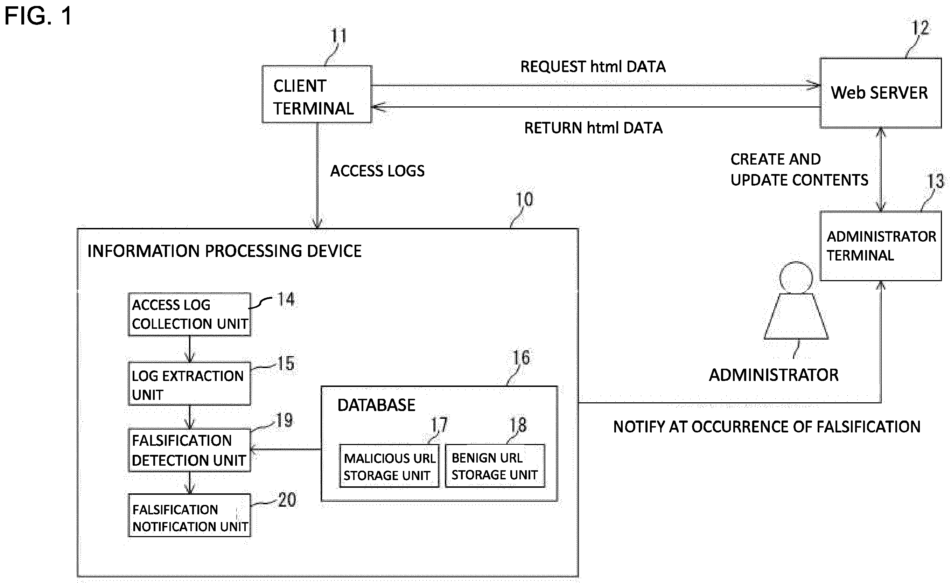

Fig. 1 is a diagram that illustrates an example of a configuration of an information processing device 10 according to a first embodiment.

First, the overall configuration will be described.

A client terminal 11 is connected to a web server 12 via the Internet and requests a content in the web server 12 specified by a URL. Then, the content returned from the web server 12 is displayed via a web browser. Example of the content includes various types of data such as html data, image data, and pdf files. Fig. 1 illustrates html data as the content.

The web server 12 returns the content requested by the client terminal 11 to the client terminal 11.

An administrator terminal 13 is a computer that is connectable to the web server 12, where the administrator creates and updates contents.

The information processing device 10 according to the embodiment collates access logs collected from the client terminal 11 of the user with a database 16 having malicious URLs registered, thereby to detect falsification of contents corresponding to the URLs accessed by the user.

The information processing device 10 collects access logs related to connection information of the client terminal 11 to the web server 12. The information processing device 10 may acquire the access logs directly from the client terminal 11, or when the client terminal 11 is connected to the web server 12 via a proxy server for controlling the connection to the Internet, the information processing device 10 may acquire access logs from the proxy server. The information processing device 10 may acquire the access logs via a firewall or the like that controls communication of the client terminal 11 at the entrance/exit to an external network. The information processing device 10 may acquire the access logs through a separate server that collects access logs from the client terminal 11 at any time.

Although one client terminal 11 is shown in Fig. 1, the information processing device 10 may be connected to a plurality of client terminals 11 and collect access logs from each of the client terminals **11.**

A specific configuration of the information processing device 10 according to the first embodiment will be described.

The information processing device 10 includes an access log collection unit **14,** a log extraction unit 15, a database 16, a falsification detection unit 19, and a falsification notification unit 20.

The functions of the units constituting the information processing device 10 may be implemented by executing predetermined program codes with the use of a processor. Instead of such software processing, the functions may be implemented, for example, by hardware processing using ASIC or the like, or by a combination of software processing and hardware processing.

The access log collection unit 14 collects the access logs when the client terminal 11 requests contents from the web server 12. The access log collection unit 14 acquires, as the access logs, identification information (for example, IP address) for identifying the client terminal 11 that has connected to the web server 12, access source URLs, connection destination URLs, web browser names used for accessing the contents, access times, and the like.

The access source URL means a URL for requesting a content from the client terminal 11. The connection destination URL means a URL to which the client terminal 11 is actually connected after the request for the content. Normally, the URL accessed by the client terminal 11 to request the content matches the URL to which the client terminal 11 is actually connected after the request. In other words, the access source URL and the connection destination URL match each other.

On the other hand, if, after the request from the client terminal 11, the client terminal 11 is automatically connected to a URL different from the request destination URL by URL redirection (the URL reference destination is automatically changed), there is no match between the URL to which the client terminal 11 has requested the content and the URL to which the client terminal 11 is actually connected after the request. In other words, the access source URL and the connection destination URL do not match each other.

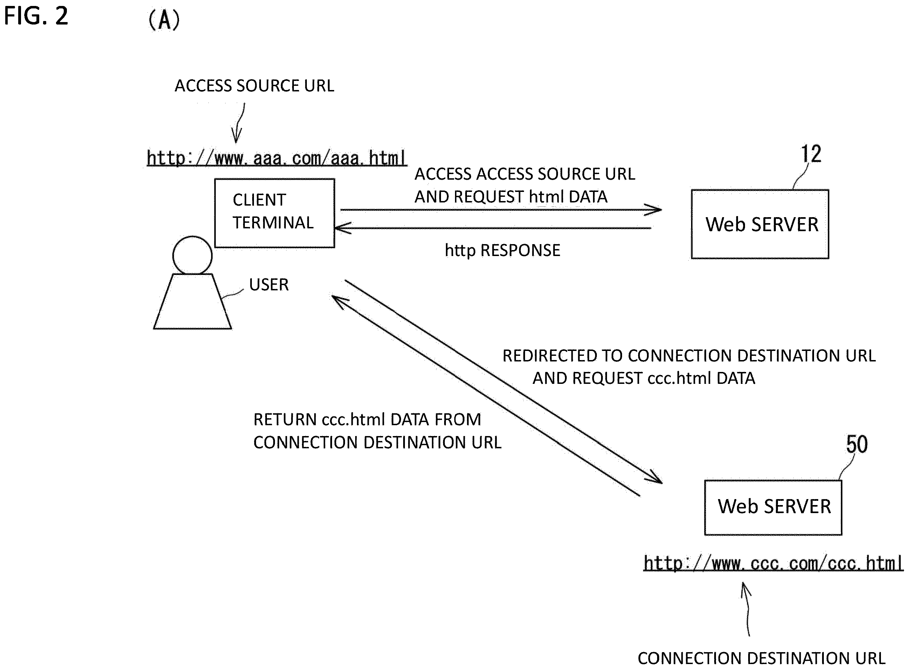

Fig. 2(A) is an explanatory diagram that explains a flow of access in which, after a request from the client terminal 11, the client terminal 11 is connected to a URL different from the request destination URL by URL redirection.

The client terminal 11 accesses the access source URL "http://www.aaa.com/aaa.html" and requests the content "aaa.html" from the web server 12. An http response is returned to the client terminal 11. Then, the client terminal 11 is URL-redirected to the URL "http://www.ccc.com/ccc.html" and requests the content "ccc.html" from a web server 50. The client terminal 11 acquires ccc.html data from the connection destination URL. In this way, when the client terminal 11 is connected to a URL that does not match the request destination URL by URL redirection, the access source URL and the connection destination URL do not match each other.

The log extraction unit 15 extracts, from the access logs collected by the access log collection unit 14, access logs in which the connection destination URL corresponding to the connection destination of the client terminal 11 and the access source URL corresponding to the content request destination are different, that is, the two URLs do not match each other.

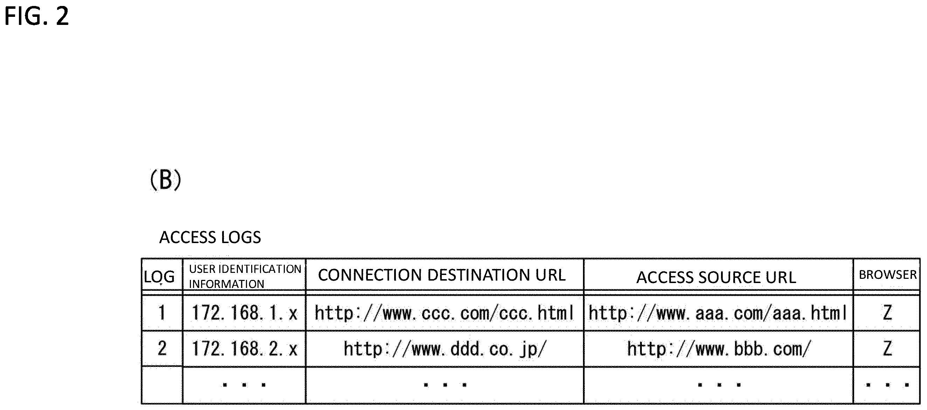

Fig. 2(B) is a diagram that illustrates an example of access logs extracted by the log extraction unit 15 of the information processing device 10.

As illustrated in Fig. 2(B), the log extraction unit 15 extracts, for each user ID (IP address) for identifying the client terminal 11 of the user, the connection destination URL to which the client terminal 11 has actually connected, the access source URL to which the user has accessed to request the content, and the like.

The database 16 has a malicious URL storage unit 17 in which malicious URLs are registered in advance, and a benign URL storage unit 18 in which benign URLs are registered in advance. In the following embodiment, URLs are registered under benign or malignant category in accordance with URLs in the database 16. Alternatively, URLs may be registered under the benign or malignant category in accordance with IP addresses in the database 16.

A malicious URL means a harmful URL that guides the client terminal 11 to contents causing the client terminal 11 to download malware such as a virus or phishing sites (fraudulent) where the client terminal 11 may download malicious files or connect to malicious websites. On the other hand, a benign URL means a URL that is harmless to the client terminal 11. In database 16, each of the registered URLs is assigned a malicious or benign category and stored.

In the database 16, stored are the destinations of notification to the administrator terminals 13 (or the administrators) who manage the contents corresponding to the benign URLs in correspondence with the benign URLs. An example of a notification destination is an email address. This notification destination is used to notify the administrator of the occurrence of falsification of a content when the falsification is detected.

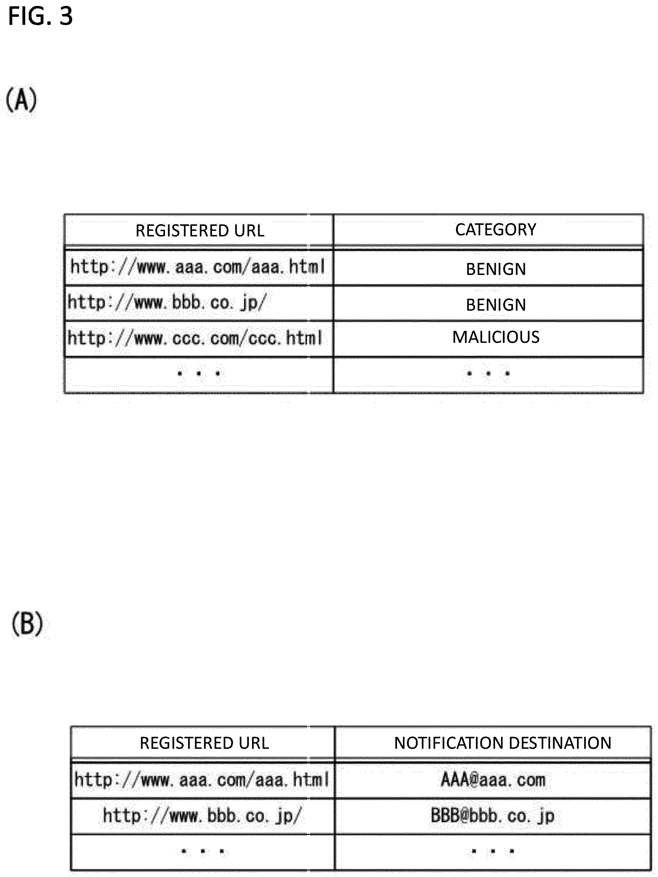

Fig. 3(A) is a diagram illustrating a storage example of URLs stored in the database 16. As illustrated in Fig. 3(A), benign or malignant category information is stored in association with each of the URLs registered in the database 16.

Fig. 3(B) is an explanatory diagram that illustrates an example of destinations of notification to administrators associated with benign URLs. As illustrated in Fig. 3(B), for each of the registered benign URLs, the email address that is the destination of notification to the administrator who manages the content corresponding to the benign URL is stored.

Returning to Fig. 1, the explanation will be continued.

The falsification detection unit 19 acquires, from the log extraction unit 15, a log in which there is no match between the connection destination URL corresponding to the connection destination of the client terminal 11 and the access source URL corresponding to the destination of content request, extracted by the log extraction unit 15. Then, the falsification detection unit 19 collates the connection destination URL that is the actual connection destination of the client terminal 11 with the database 16. If the connection destination URL matches any malicious URL, the falsification detection unit 19 detects falsification of the content corresponding to the access source URL. In a case where URLs are registered under the benign or malignant category according to IP addresses in the database 16, if the IP address corresponding to the connection destination URL matches any malicious IP address, the falsification detection unit 19 detects falsification of the content.

Normally, when a user accesses a legitimate website, the URL of the access source and the URL of the actual connection destination by the client terminal 11 match each other, and both URLs belong to the benign URLs. Therefore, if the connection destination URL and the access source URL do not match each other and the connection destination URL matches any malicious URL, it can be determined that the connection to the legitimate website has been intentionally changed, and that the legitimate website has been falsified, that is, the content corresponding to the access source URL has been falsified.

When a legitimate website intentionally URL-redirects the client terminal 11 that has accessed the website, it is assumed that the URL of the access source and the actual connection destination URL do not match each other. In this case, since the connection destination URL does not match any malicious URL, falsification of the content is not detected.

When falsification is detected, the falsification notification unit 20 notifies the occurrence of the falsification to the administrator of the web server 12 corresponding to the content of which the falsification is detected. Specifically, the falsification notification unit 20 notifies the occurrence of falsification using the destination of notification to the administrator terminal 13 (or the administrator) that manages the content corresponding to the benign URL. In addition, as a method of notification to the administrator, it is not necessary to store the destination of notification to the administrator terminal 13 in advance, but the access destination of the administrator may be searched based on the access source URL corresponding to the content of which falsification is detected, and the occurrence of falsification may be notified to the administrator of the web server 12. For example, the domain part is extracted from the access source URL, and the notification destination is searched for with this domain part coupled to "/content/", "/info/", or the like that is generally used in the URL of the inquiry destination (contact destination). Then, based on the notification destination, the occurrence of falsification is notified to the administrator of the web server 12.

Subsequently, the operations of the information processing device 10 according to the first embodiment will be described.

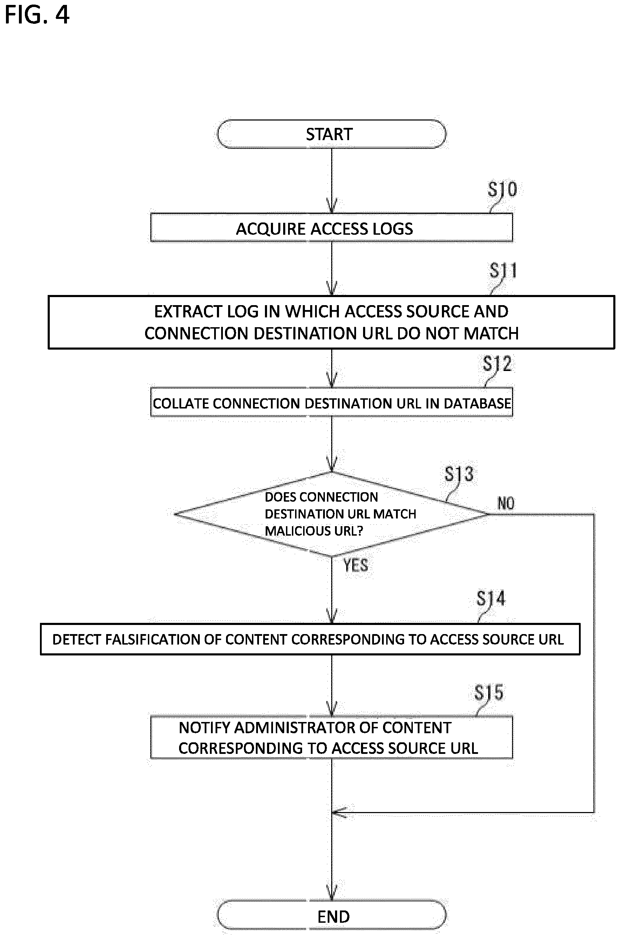

Fig. 4 is a flowchart of the information processing method according to the first embodiment (see Fig. 1 as appropriate).

The access log collection unit 14 acquires access logs to the Internet from the client terminal 11 (S10).

The log extraction unit 15 extracts, from the access logs acquired from the client terminal 11, a log in which the connection destination URL actually connected to the client terminal 11 and the access source URL corresponding to the content request destination do not match each other (S11).

The falsification detection unit 19 collates the connection destination URL in the database 16 and determines whether the connection destination URL matches any malicious URL. If the connection destination URL matches any malicious URL, the falsification detection unit 19 detects falsification of the content corresponding to the access source URL (S12, S13: YES, S14). On the other hand, if there is no match, the falsification detection unit 19 determines that the content has not been falsified (S13: NO, end).

When falsification is detected, the falsification notification unit 20 notifies the occurrence of the falsification to the administrator of the web server 12 corresponding to the content of which the falsification is detected (S15). In addition, the falsification notification unit 20 may store the access source URL corresponding to the content of which falsification has been detected, as a malicious URL, in the database 16. If the URL is already categorized as benign URL, the category is changed to malicious URL.

In this way, the information processing device 10 according to the first embodiment collates the access logs collected from the user's client terminal 11 with the database 16 in which the malicious URLs are registered in advance, so that falsification of the web server 12 can be detected at an early stage. Then, the administrator of the web server 12 can be notified of the falsification of the content. As a result, the administrator can notice the falsification of the web server 12 at an early stage, and can end the attack by a malicious third party, such as a watering hole attack, in a short period of time.

### (Second Embodiment)

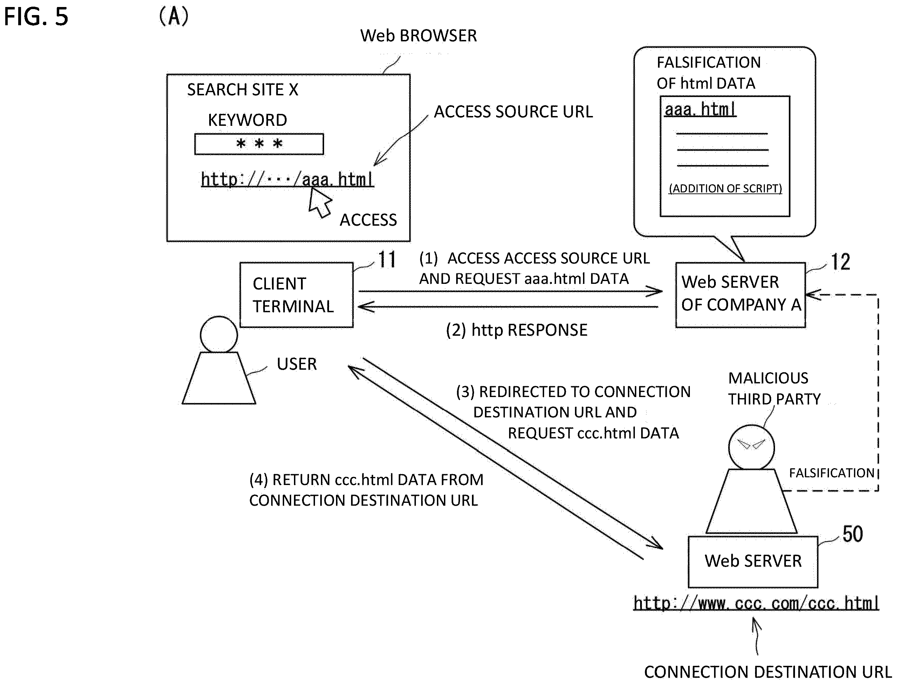

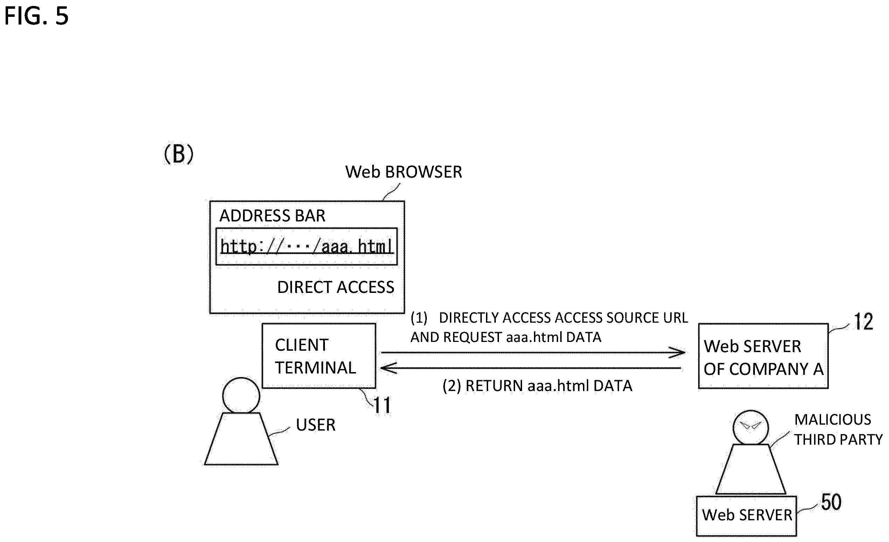

First, an example of a drive-by download attack using a watering hole attack will be described with reference to Fig. 5. In this example, the html data (aaa.html) managed by the web server 12 of company A is falsified by a malicious third party, and a special redirect script is embedded in aaa.html in which, when a request for aaa.html is made with a referrer of a specific search site, URL redirection to a malicious third-party's web server 50 is executed. The referrer means the URL that was accessed immediately before the shift to the URL connected by the client terminal 11.

As shown in Fig. 5(A), when the user inputs a keyword related to company A on a search site X, the URL of the content of company A corresponding to the keyword is displayed on the client terminal 11. Then, the user's client terminal 11 requests aaa.html from the web server 12 of company A. At this time, the client terminal 11 that has executed the access with the referrer of the search site X is guided to the web server 50 managed by a malicious third party by the redirect script embedded in aaa.html, and acquires ccc.html which is a malicious content.

On the other hand, as shown in Fig. 5(B), when the client terminal 11 requests aaa.html without going through the search site X, the embedded redirect script is not executed, so that the client terminal 11 acquires aaa.html from the web server 12 of company A. In this way, the script is not executed when the URL is directly accessed, such as when accessing by bookmark, and the client terminal 11 is subjected to URL redirection only at the time of accessing via a search site. For this reason, an administrator who normally does not access via a search site may not notice even if falsification has occurred, and the detection of falsification may be delayed.

Therefore, in an information processing device 10 according to a second embodiment, when the actual connection destination URL of the client terminal 11 matches any malicious URL, the information processing device 10 directly requests the access source URL, that is, requests the content without a referrer, thereby verifying the connection destination URL.

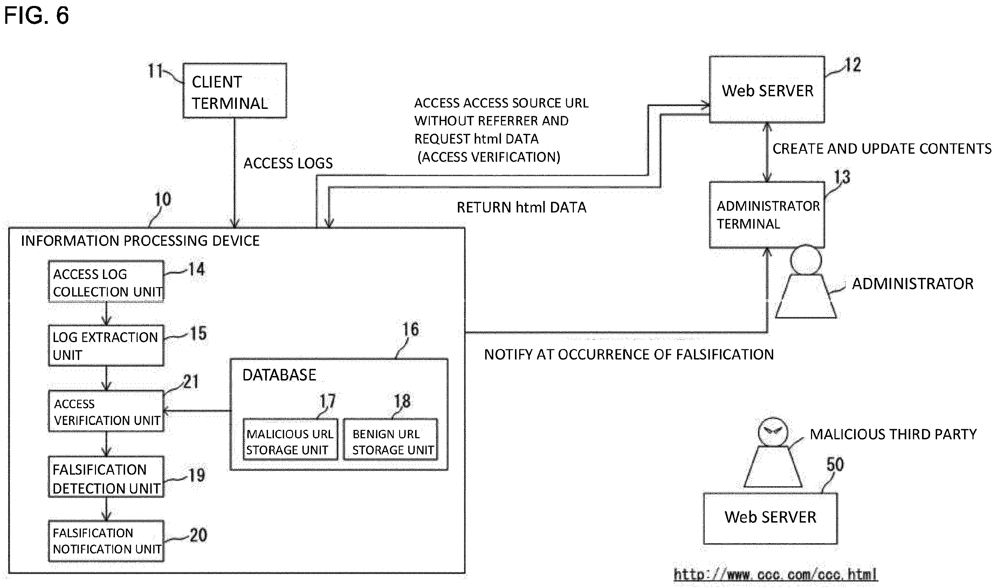

Fig. 6 is a diagram that illustrates an example of a configuration of the information processing device 10 according to the second embodiment. In Fig. 6, parts having the same configuration or function as that of the first embodiment (Fig. 1) are denoted by the same reference numerals, and duplicate description will be omitted. In the following, a connection destination URL extracted from the access log is referred to as "first connection destination URL", and a connection destination URL when the access source URL is directly requested by an access verification unit 21 is referred to as "second connection destination URL", which are thus separately described.

A log extraction unit 15 extracts, from the access logs collected by the access log collection unit 14, access logs in which the first connection destination URL corresponding to the connection destination of the client terminal 11 and the access source URL corresponding to the content request destination do not match each other.

The access verification unit 21 collates the first connection destination URL in the database 16, and if the first connection destination URL matches any malicious URL, requests directly the access source URL extracted from the access log, from the web server 12. Then, the access verification unit 21 compares the second connection destination URL with the access source URL at the time of executing this direct request.

The falsification detection unit 19 detects falsification of the content when the access source URL and the second connection destination URL match each other based on the comparison by the access verification unit 21.

When a request for the access source URL is directly made to the web server 12 even though, in the collected access log, the access source URL and the first connection destination URL do not match each other and the first connection destination URL matches any malicious URL, the match between the second connection destination URL and the access source URL means that the connection to a legitimate website has been intentionally changed depending on the access method. It can be determined that falsification of the legitimate website, that is, falsification of the content corresponding to the access source URL has occurred.

On the other hand, the falsification detection unit 19 detects falsification of the content when the access source URL and the second connection destination URL do not match each other based on the comparison by the access verification unit 21 and the client terminal 11 is URL-redirected to the web server 50 of a malicious third party so that the second connection destination URL matches any malicious URL. If the second connection destination URL does not match any malicious URL, the connected second connection destination URL will be harmless, but it is undetermined whether the content corresponding to the access source URL has been falsified. Thus, the administrator of the information processing device 10 re-verifies the access source URL to confirm whether the content has been falsified.

Subsequently, the operations of the information processing device 10 according to the second embodiment will be described.

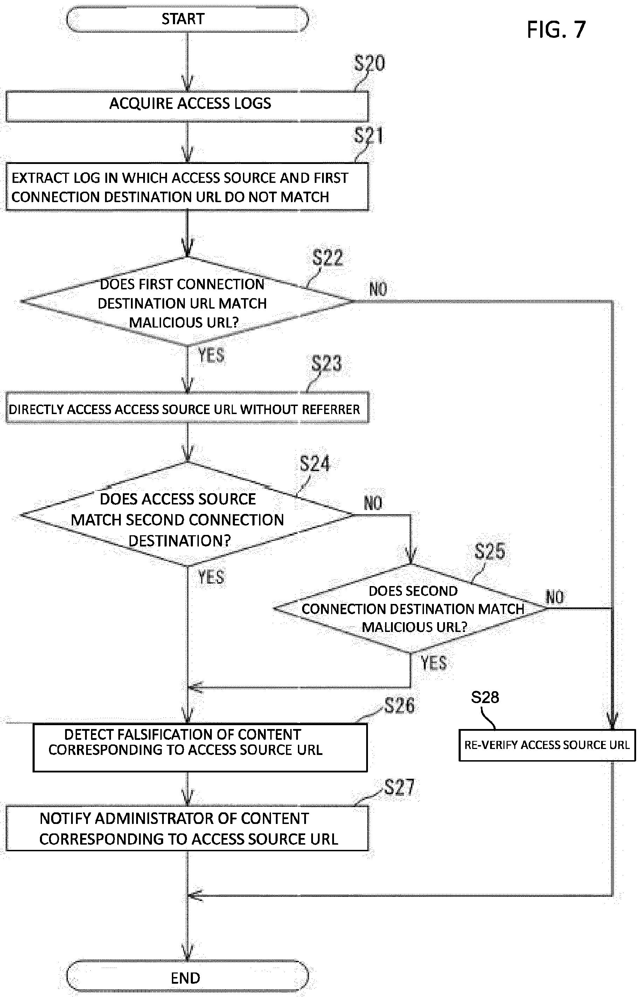

Fig. 7 is a flowchart that illustrates an example of an information processing method according to the second embodiment (see Fig. 6 as appropriate).

The access log collection unit 14 acquires access logs to the Internet from the client terminal 11 (S20).

The log extraction unit 15 extracts, from the access logs acquired from the client terminal 11, a log in which the access source URL corresponding to the content requested by the user and the first connection destination URL actually connected to the client terminal 11 do not match each other (S21).

The access verification unit 21 determines whether the first connection destination URL matches any malicious URL (S22).

Then, when the first connection destination URL matches any malicious URL, the access verification unit 21 directly accesses the access source URL to the web server 12 without a referrer, thereby to acquire the second connection destination URL (S22; YES, S23). When the first connection destination URL does not match any malicious URL, the administrator of the information processing device 10 re-verifies the access source URL to confirm whether the content has been falsified (S22: NO, S28).

When it is confirmed as a result of re-verification that the content has been falsified, the administrator of the information processing device 10 stores the access source URL corresponding to the content, as a malicious URL, in the database 16. In addition, the administrator of the information processing device 10 notifies the occurrence of falsification to the administrator of the content corresponding to the access source URL. When it is not confirmed that the content has been falsified, the access source URL is stored, as a benign URL, in the database 16.

The falsification detection unit 19 detects falsification of the content corresponding to the access source URL when the access source and the second connection destination URL match each other based on the comparison by the access verification unit 21 (S24: YES, S26).

On the other hand, the falsification detection unit 19 detects falsification of the content when the access source URL and the second connection destination URL do not match each other based on the comparison by the access verification unit 21 and the client terminal 11 is URL-redirected to the web server 50 of a malicious third party so that the second connection destination URL matches any malicious URL (S24: NO, S25: YES, S26).

If the access source URL and the second connection destination URL do not match according to the comparison by the access verification unit 21, and the second connection destination URL does not match the malicious URL, the administrator of the information processing device 10 re-verifies the access source URL to confirm whether the content has been falsified (S24: NO, S25: NO, S28).

If falsification is confirmed as a result of re-verification, the administrator of the information processing device 10 will store the access source URL corresponding to the content and the second connection destination URL that did not match the malicious URL at the time of access verification, as the malicious URL, in database 16. In addition, the administrator of the information processing device 10 notifies the occurrence of falsification to the administrator of the content corresponding to the access source URL. On the other hand, when it is not confirmed that the content has been falsified, the access source URL is stored in database 16 as a benign URL.

Finally, when the falsification is detected, the falsification notification unit 20 notifies the administrator of the content corresponding to the access source URL of the occurrence of falsification (S27). In addition, the falsification notification unit 20 may store the access source URL corresponding to the content of which falsification has been detected, as a malicious URL, in the database 16. If the URL is already categorized as benign URL, the category is changed to malicious URL.

In this way, the information processing device 10 according to the second embodiment can detect falsification of the web server 12 early and accurately by requesting, from the information processing device 10, the content to the access source URL without a referrer and executing verification of the connection destination. The administrator can quickly notice a malicious third party's sophisticated falsification act such as intentionally changing the connection destination URL according to the method of accessing the website, and can bring a malicious third party's sophisticated attack such as drive-by download attack described above into an end in a short period of time.

### (Third Embodiment)

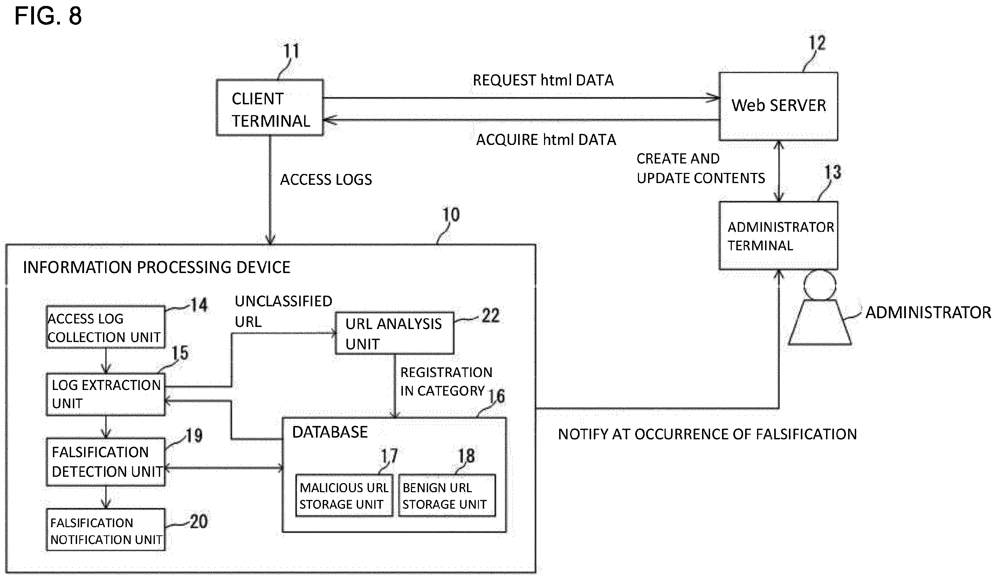

Fig. 8 is a diagram that illustrates an example of a configuration of the information processing device 10 according to a third embodiment. In Fig. 8, parts having the same configuration or function as that of the first embodiment (Fig. 1) are denoted by the same reference numerals, and duplicate description will be omitted.

The information processing device 10 according to the third embodiment, when a URL not registered in the database 16 is extracted in an access log, analyzes and categorizes the unclassified URL, and detects whether the content has been falsified based on the result of the categorization.
the log extraction unit 15 detects an unclassified URL that does not match any of the URLs registered in the database 16 from the collected access logs.

A URL analysis unit 22 analyzes whether the unclassified URL is a malicious URL, and registers the unclassified URL as either a benign URL or a malicious URL.

As a method of analyzing an unclassified URL, for example, in a virtual environment where the unclassified URL can be accessed and the acquired executable file can be executed, it is analyzed whether the unclassified URL is a malicious URL based on the result of executing the file and the like. More specifically, a hash belonging to a malicious file is stored in advance, and the acquired file is compared with this hash value to determine whether the acquired file is malicious, whereby it is analyzed whether the unclassified URL is a malicious URL. Otherwise, it may be analyzed whether the unclassified URL is a malicious URL by using commonly used anti-virus software to access the unclassified URL and determining whether the acquired executable file is malware.

Still otherwise, harmless domains of benign URLs may be acquired in advance so that an unclassified URL including any of the domains may be classified as benign and a URL not including any of the domains may be classified as a malicious URL. The category of the unclassified URL registered as benign or malignant may be changed by the administrator of the information processing device 10.

The falsification detection unit 19 detects falsification if the access source URL matches any benign URL, whereas the connection destination URL matches any malicious URL and the category of the URL shifts from benign to malicious. If the content has not been falsified, the category shift from a benign URL to a malicious URL cannot occur, so the category shift from benign to malignant can be determined to be falsification of the content.

Subsequently, the operations of the information processing device 10 according to the third embodiment will be described.

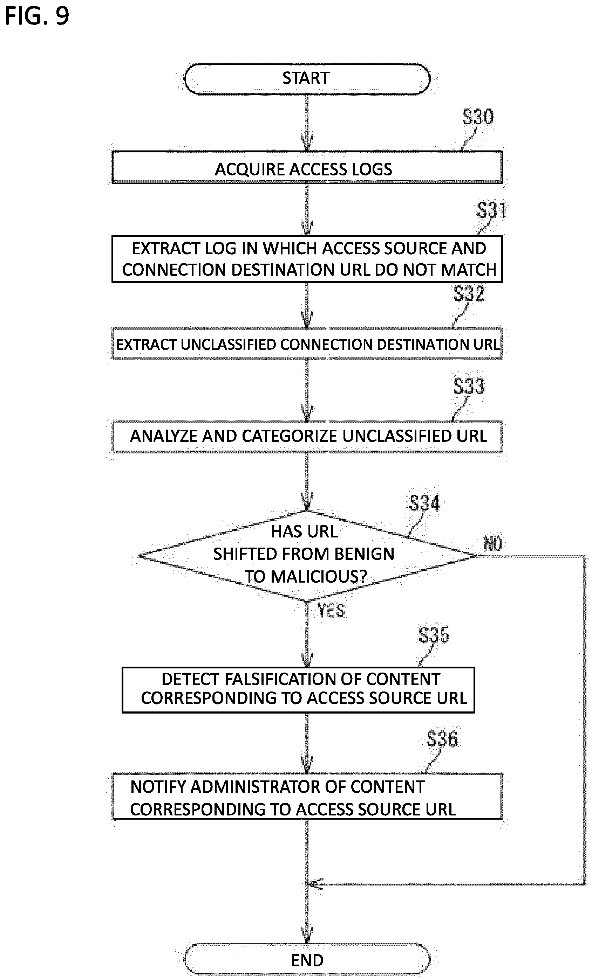

Fig. 9 is a flowchart that illustrates an example of an information processing method according to the third embodiment (see Fig. 8 as appropriate).

The access log collection unit 14 acquires access logs to the Internet from the client terminal 11 (S30).

The log extraction unit 15 extracts, from the access logs acquired from the client terminal 11, a log in which the access source URL corresponding to the content requested by the user and the connection destination URL actually connected to the client terminal 11 do not match each other (S31).

The log extraction unit 15 collates the connection destination URL to the database 16 and extracts an unclassified connection destination URL that is not registered in the database (S32).

The URL analysis unit 22 analyzes whether the extracted unclassified URL is a malicious URL, and classifies the unclassified URL into either a benign or malignant category (S33).

The falsification detection unit 19 determines which category the access source URL and the connection destination URL belong in the database. The falsification detection unit 19 detects falsification of the content corresponding to the access source URL if the access source URL is classified in the benign category, whereas the connection destination URL is classified in the malicious category and the category of the connection destination URL from the access source URL shifts from benign to malicious (S34: YES, S35).

On the other hand, the falsification detection unit 19 determines that no falsification has occurred if the category of the connection destination URL from the access source URL remains unchanged from benign (S34: NO, End).

Finally, when the falsification is detected, the falsification notification unit 20 notifies the administrator of the content corresponding to the access source URL of the occurrence of falsification (S37). In addition, the falsification notification unit 20 may store the access source URL corresponding to the content of which falsification has been detected, as a malicious URL, in the database 16. If the URL is already categorized as benign URL, the category is changed to malicious URL.

The information processing device 10 according to the third embodiment categorizes an unclassified URL based on whether it is a malicious URL, and detects falsification using the classification result. Since malicious URLs are constantly increasing and it takes time to discover them, it is difficult to immediately detect malicious sites in a comprehensive manner. However, it is possible to detect falsification of the web server 12 at an early stage by categorizing an unclassified URL not registered in the database 16 based on whether it is a malicious URL.

According to the information processing device of each of the above-described embodiments, it is possible to detect the falsification of the web server at an early stage and notify the administrator of the server 12 of the falsification of the content at an early stage by collating the access logs collected from the user's client terminal 11 with the database in which malicious URLs are registered in advance. As a result, the administrator can notice the falsification of the web server 12 at an early stage, and can end the attack by a malicious third party, such as a watering hole attack, in a short period of time.

The programs to be executed by the information processing device 10 are provided by being incorporated in advance in a storage circuit such as a ROM. Alternatively, the programs may be provided as a file in an installable or executable format stored on a computer-readable storage medium such as a CD-ROM, CD-R, memory card, DVD, or flexible disk. The programs to be executed by the information processing device 10 may be stored on a computer connected to a network such as the Internet and provided by downloading via the network.

### Reference Signs List

- 10: Information processing device
- 11: Client terminal
- 12: Web server
- 13: Administrator terminal
- 14: Access log collection unit
- 15: Log extraction unit
- 16: Database
- 17: Malicious URL storage unit
- 18: Benign URL storage unit
- 19: Falsification detection unit
- 20: Falsification notification unit
- 21: Access verification unit
- 22: URL analysis unit
- 50: Malicious third party's web server

## Claims

1. An information processing device (10) comprising:
an access log collection unit (14) configured to collect access logs when a client terminal (11) requests a content from a web server (12, 50);
a log extraction unit (15) configured to extract, from the access logs collected by the access log collection unit (14), an access log in which an access source URL corresponding to a request destination of the content and a connection destination URL do not match each other;
a database (16) in which a malicious URL is registered in advance; and
a falsification detection unit (19) configured to collate the connection destination URL, which does not match the access source URL, extracted by the log extraction unit (15) with the database (16), and configured to detect falsification of the content if the connection destination URL extracted by the log extraction unit (15) matches the malicious URL or a malicious IP address corresponding to the connection destination URL extracted by the log extraction unit (15) matches the malicious IP address.

2. The information processing device (10) according to claim 1, comprising a falsification notification unit (20) configured to notify, if the falsification is detected, occurrence of the falsification to an administrator of the web server (12, 50) corresponding to the content in which the falsification is detected.

3. The information processing device (10) according to claim 1, comprising an access verification unit (21) configured to make, if the connection destination URL matches the malicious URL, a direct request of an access source URL extracted from the access log to the web server (12, 50) and configured to compare the access source URL with the connection destination URL at a time of the direct request being made, wherein
the falsification detection unit (19) is configured to detect falsification of the content when the access source URL and the connection destination URL at the time of the direct request being made match each other based on a comparison by the access verification unit (21).

4. The information processing device (10) according to claim 1, wherein
an unclassified URL that does not match a URL registered in the database (16) is extracted from the access logs collected,
a benign URL is registered in advance together with the malicious URL in the database (16), and
the information processing device (10) comprises a URL analysis unit (22) configured to analyze whether the unclassified URL is a malicious URL and registers the unclassified URL as the benign URL or the malicious URL.

5. The information processing device (10) according to claim 1, wherein
a benign URL is registered in advance together with the malicious URL in the database (16), and
the falsification detection unit (19) is configured to detect falsification of the content if an access source URL matches the benign URL, whereas the connection destination URL matches the malicious URL, and a URL category shifts from benign to malicious.

6. An information processing method comprising:
a step of collecting access logs when a client terminal (11) requests a content from a web server (12, 50);
a step of extracting, from the access logs collected, an access log in which an access source URL corresponding to a request destination of the content and a connection destination URL do not match each other; a step of registering a malicious URL in database (16) in advance; and
a step of collating a connection destination URL , which does not match the access source URL, extracted by the log extraction unit (15) with the database (16) and detecting falsification of the content if the connection destination URL extracted by the log extraction unit (15) matches the malicious URL or a malicious IP address corresponding to the connection destination URL extracted by the log extraction unit (15) matches the malicious IP address.

## Patentansprüche

1. Informationsverarbeitungsvorrichtung (10), umfassend:
eine Zugriffsprotokollsammeleinheit (14), die dazu konfiguriert ist, Zugriffsprotokolle zu sammeln, wenn ein Client-Endgerät (11) einen Inhalt von einem Webserver (12, 50) anfordert;
eine Protokollextraktionseinheit (15), die dazu konfiguriert ist, aus den Zugriffsprotokollen, die von der Zugriffsprotokollsammeleinheit (14) gesammelt wurden, ein Zugriffsprotokoll zu extrahieren, in dem eine Zugriffsquellen-URL, die einem Anforderungsziel des Inhalts entspricht, und eine Verbindungsziel-URL nicht miteinander übereinstimmen;
eine Datenbank (16), in der eine böswillige URL im Voraus registriert wird; und
eine Fälschungserkennungseinheit (19), die dazu konfiguriert ist, die Verbindungsziel-URL, die nicht mit der Zugriffsquellen-URL übereinstimmt, die von der Protokollextraktionseinheit (15) extrahiert wurde, mit der Datenbank (16) abzugleichen, und dazu konfiguriert ist, eine Fälschung des Inhalts zu erkennen, wenn die Verbindungsziel-URL, die von der Protokollextraktionseinheit (15) extrahiert wurde, mit der böswilligen URL übereinstimmt oder eine böswillige IP-Adresse, die der Verbindungsziel-URL entspricht, die von der Protokollextraktionseinheit (15) extrahiert wurde, mit der böswilligen IP-Adresse übereinstimmt.

2. Informationsverarbeitungsvorrichtung (10) nach Anspruch 1, umfassend eine Fälschungsbenachrichtigungseinheit (20), die dazu konfiguriert ist, wenn die Fälschung erkannt wird, einen Administrator des Webservers (12, 50) entsprechend dem Inhalt, in dem die Fälschung erkannt wird, über ein Auftreten der Fälschung zu benachrichtigen.

3. Informationsverarbeitungsvorrichtung (10) nach Anspruch 1, umfassend eine Zugriffsverifizierungseinheit (21), die dazu konfiguriert ist, wenn die Verbindungsziel-URL mit der böswilligen URL übereinstimmt, eine direkte Anforderung einer Zugriffsquellen-URL, die aus dem Zugriffsprotokoll extrahiert wird, an den Webserver (12, 50) zu erstellen, und dazu konfiguriert ist, die Zugriffsquellen-URL mit der Verbindungsziel-URL zu einer Zeit, zu der die direkte Anforderung erstellt wird, zu vergleichen, wobei die Fälschungserkennungseinheit (19) dazu konfiguriert ist, eine Fälschung des Inhalts zu erkennen, wenn die Zugriffsquellen-URL und die Verbindungsziel-URL zu der Zeit, zu der die direkte Anforderung erstellt wird, auf der Basis eines Vergleichs durch die Zugriffsverifizierungseinheit (21) miteinander übereinstimmen.

4. Informationsverarbeitungsvorrichtung (10) nach Anspruch 1, wobei
eine nicht klassifizierte URL, die nicht mit einer URL übereinstimmt, die in der Datenbank (16) registriert ist, aus den gesammelten Zugriffsprotokollen extrahiert wird,
eine gutartige URL zusammen mit der böswilligen URL im Voraus in der Datenbank (16) registriert wird, und
die Informationsverarbeitungsvorrichtung (10) eine URL-Analyseeinheit (22) umfasst, die dazu konfiguriert ist, zu analysieren, ob die nicht klassifizierte URL eine böswillige ULR ist, und die nicht klassifizierte URL als die gutartige URL oder die böswillige URL registriert.

5. Informationsverarbeitungsvorrichtung (10) nach Anspruch 1, wobei
eine gutartige URL zusammen mit der böswilligen URL im Voraus in der Datenbank (16) registriert wird, und
die Fälschungserkennungseinheit (19) dazu konfiguriert ist, eine Fälschung des Inhalts zu erkennen, wenn eine Zugriffsquellen-URL mit der gutartigen URL übereinstimmt, wohingegen die Verbindungsziel-URL mit der böswilligen URL übereinstimmt und eine URL-Kategorie von gutartig zu böswillig wechselt.

6. Informationsverarbeitungsverfahren, umfassend:
einen Schritt eines Sammelns von Zugriffsprotokollen, wenn ein Client-Endgerät (11) einen Inhalt von einem Webserver (12, 50) anfordert;
einen Schritt eines Extrahierens eines Zugriffsprotokolls aus den gesammelten Zugriffsprotokollen, in dem eine Zugriffsquellen-URL, die einem Anforderungsziel des Inhalts entspricht, und eine Verbindungsziel-URL nicht miteinander übereinstimmen; und
einen Schritt eines Registrierens einer böswilligen URL im Voraus in einer Datenbank (16); und
einen Schritt eines Abgleichens einer Verbindungsziel-URL, die nicht mit der Zugriffsquellen-URL übereinstimmt, die von der Protokollextraktionseinheit (15) extrahiert wurde, mit der Datenbank (16) und Erkennen einer Fälschung des Inhalts, wenn die Verbindungsziel-URL, die von der Protokollextraktionseinheit (15) extrahiert wurde, mit der böswilligen URL übereinstimmt oder eine böswillige IP-Adresse, die der Verbindungsziel-URL entspricht, die von der Protokollextraktionseinheit (15) extrahiert wurde, mit der böswilligen IP-Adresse übereinstimmt.

## Revendications

1. Dispositif de traitement d'informations (10), comprenant :
une unité de collecte de journaux d'accès (14) configurée pour collecter des journaux d'accès lorsqu'un terminal client (11) demande un contenu à un serveur web (12, 50) ;
une unité d'extraction de journaux (15) configurée pour extraire, à partir des journaux d'accès collectés par l'unité de collecte de journaux d'accès (14), un journal d'accès dans lequel une URL source d'accès correspondant à une destination de demande du contenu et une URL de destination de connexion ne correspondent pas l'une à l'autre ;
une base de données (16) dans laquelle une URL malveillante est enregistrée à l'avance ; et
une unité de détection de falsification (19) configurée pour collationner l'URL de destination de connexion, qui ne correspond pas à l'URL source d'accès, extraite par l'unité d'extraction de journaux (15), avec la base de données (16), et configurée pour détecter une falsification du contenu si l'URL de destination de connexion extraite par l'unité d'extraction de journaux (15) correspond à l'URL malveillante ou si une adresse IP malveillante correspondant à l'URL de destination de connexion extraite par l'unité d'extraction de journaux (15) correspond à l'adresse IP malveillante.

2. Dispositif de traitement d'informations (10) selon la revendication 1, comprenant une unité de notification de falsification (20) configurée pour notifier, si la falsification est détectée, l'occurrence de la falsification, à un administrateur du serveur web (12, 50) correspondant au contenu dans lequel la falsification est détectée.

3. Dispositif de traitement d'informations (10) selon la revendication 1, comprenant une unité de vérification d'accès (21) configurée pour effectuer, si l'URL de destination de connexion correspond à l'URL malveillante, une demande directe d'une URL source d'accès extraite du journal d'accès au serveur web (12, 50) et configurée pour comparer l'URL source d'accès avec l'URL de destination de connexion à un instant où la demande directe est effectuée, dans lequel l'unité de détection de falsification (19) est configurée pour détecter la falsification du contenu lorsque l'URL source d'accès et l'URL de destination de connexion à l'instant où la demande directe est effectuée correspondent l'une à l'autre, sur la base d'une comparaison effectuée par l'unité de vérification d'accès (21).

4. Dispositif de traitement d'informations (10) selon la revendication 1, dans lequel
une URL non classée qui ne correspond pas à une URL enregistrée dans la base de données (16) est extraite des journaux d'accès collectés,
une URL bénigne est enregistrée à l'avance avec l'URL malveillante dans la base de données (16), et
le dispositif de traitement d'informations (10) comprend une unité d'analyse d'URL (22) configurée pour analyser si l'URL non classée est une URL malveillante, et il enregistre l'URL non classée en tant que l'URL bénigne ou l'URL malveillante.

5. Dispositif de traitement d'informations (10) selon la revendication 1, dans lequel
une URL bénigne est enregistrée à l'avance avec l'URL malveillante dans la base de données (16), et
l'unité de détection de falsification (19) est configurée pour détecter une falsification du contenu si une URL source d'accès correspond à l'URL bénigne, tandis que l'URL de destination de connexion correspond à l'URL malveillante, et qu'une catégorie d'URL passe de bénigne à malveillante.

6. Procédé de traitement d'informations, comprenant :
une étape consistant à collecter des journaux d'accès lorsqu'un terminal client (11) demande un contenu à un serveur web (12, 50) ;
une étape consistant à extraire, à partir des journaux d'accès collectés, un journal d'accès dans lequel une URL source d'accès correspondant à une destination de demande du contenu et une URL de destination de connexion ne correspondent pas l'une à l'autre ;
une étape consistant à enregistrer, à l'avance, une URL malveillante dans une base de données (16) ; et
une étape consistant à collationner une URL de destination de connexion, qui ne correspond pas à l'URL source d'accès, extraite par l'unité d'extraction de journaux (15), avec la base de données (16), et à détecter une falsification du contenu si l'URL de destination de connexion extraite par l'unité d'extraction de journaux (15) correspond à l'URL malveillante ou si une adresse **IP** malveillante correspondant à l'URL de destination de connexion extraite par l'unité d'extraction de journaux (15) correspond à l'adresse IP malveillante.
